# EUROPEAN PATENT APPLICATION

(11) **EP 4 799 470 A1**
(43) Date of publication of application: **02.09.2026**
(21) Application number: 26159334.7
(22) Date of filing: 18.02.2026
(51) Int. Cl.: A01D 90/10, B60P 1/40, A01D 41/12

(54) **AUTONOMOUS AGRICULTURAL SYSTEM INCLUDING A CART MANAGEMENT SYSTEM FOR AUTOMATICALLY OPERATING EXTENSION AND RETRACTION OF AN AUGER OF AN UNLOADING SYSTEM AND RELATED METHODS**

(30) Priority: 27.02.2025 US 202563764441 P
(71) Applicant: AGCO International GmbH, 8212 Neuhausen am Rheinfall (CH); PTx Trimble LLC, Westminster, CO 80021 (US)
(72) Inventor: CHRISTIANSEN, Martin Peter, 8930 Randers (DK); MUJKIC, Esma, 8930 Randers (DK); Steen, Kim Arild, 8930 Randers (DK); Beck, Nicolai, 8930 Randers (DK); Toustrup, Viktor Johns, 8930 Randers (DK); Murman, Josh, Rising City, 68658 (US)
(74) Representative: AGCO Intellectual Property Department

(57) **Abstract**

A cart management system for monitoring and controlling operation of a cart of an autonomous agricultural system. The cart management system includes an array of sensors mounted proximate or on an end of the agricultural vehicle facing the cart and is configured to: capture, via the array of sensors and in real-time, sensor data of the cart, an auger of an unloading system of the cart, and a commodity within a hopper of the cart; analyze the captured sensor data utilizing machine learning models to identify the cart, the auger of the unloading system of the cart, and the commodity within the hopper of the cart depicted within the sensor data; and based on the analysis of the captured sensor data, automatically cause the auger of the unloading system to extend or to retract prior to or subsequent to an unloading process of unloading the commodity.

## Description

### CROSS-REFERENCE TO RELATED APPLICATIONS

### BACKGROUND

In the realm of precision agriculture, managing grain cart operations during harvesting operations poses significant challenges, particularly in accurately monitoring and controlling the positioning and state of grain cart components such as an auger. Traditional systems often rely on manual oversight to ensure proper alignment, extension, and retraction of the auger, which can lead to inefficiencies, potential spillage, and operational delays. Existing automated systems often struggle with accurate real-time adaptation to varying field conditions and do not effectively respond to mechanical malfunctions or misalignments during operation. Moreover, conventional systems typically do not account for the dynamic constraints imposed by different grain cart designs, such as those with wheels versus tracks, affecting maneuverability and operational safety.

### BRIEF SUMMARY

Some embodiments include an autonomous agricultural system comprising an agricultural vehicle and a cart operably coupled to the agricultural vehicle, the agricultural vehicle comprising: a cart management system for monitoring and controlling operation of the cart and comprising: an array of sensors mounted proximate or on an end of the agricultural vehicle facing the cart; at least one processor; and at least one non-transitory computer-readable storage medium storing instructions thereon that, when executed by the at least one processor, cause the cart management system to: capture, via the array of sensors and in real-time, sensor data of the cart, an auger of an unloading system of the cart, and a commodity within a hopper of the cart; analyze the captured sensor data utilizing one or more machine learning models to identify and classify the cart, the auger of the unloading system of the cart, and the commodity within the hopper of the cart depicted within the sensor data; and based at least partially on the analysis of the captured sensor data, automatically cause the auger of the unloading system to extend or to retract prior to or subsequent to an unloading process of unloading the commodity into a trailer of a transport vehicle.

The array of sensors may include at least one of a light detection and ranging (LIDAR) camera, an RGB camera, a stereo camera, a polarized camera, a thermal camera, an ultrasonic sensor, or a radio detection and ranging (RADAR) device.

Analyzing the captured sensor data may include utilizing a convolutional neural network (CNN) to identify and classify the cart, the auger of the unloading system of the cart, and the commodity within the hopper of the cart depicted within the sensor data.

Analyzing the captured sensor data further may include identifying and classifying the transport vehicle.

Capturing, via the array of sensors and in real-time, sensor data of the cart, the auger of the unloading system of the cart, and the commodity within a hopper of the cart may be triggered by the agricultural vehicle crossing a virtual boundary.

Capturing, via the array of sensors and in real-time, sensor data of the cart, the auger of the unloading system of the cart, and the commodity within a hopper of the cart may be triggered by the agricultural vehicle aligning with the transport vehicle.

The agricultural vehicle wherein aligning with the transport vehicle may include determining a path between a current position of the agricultural vehicle and an aligned position relative to the transport vehicle; and causing the agricultural vehicle to travel along the determined path to the aligned position.

The aligned position may include a position and an orientation of the agricultural vehicle relative to a determined position of the transport vehicle that aligns the agricultural vehicle for unloading the commodity into the trailer of the transport vehicle.

The autonomous agricultural system may further include instructions that, when executed by the at least one processor, cause the cart management system to, based at least partially on the analysis of the captured sensor data, modify operation of the unloading system.

The autonomous agricultural system may further include instructions that, when executed by the at least one processor, cause the cart management system to, based at least partially on the analysis of the captured sensor data, halt operation of the unloading system.

Analyzing the captured sensor data further may include identifying and classifying a current position of the auger of the unloading system.

Analyzing the captured sensor data further may include identifying and classifying a position and an orientation of the cart relative to a position and an orientation of the trailer of the transport vehicle.

Analyzing the captured sensor data further may include identifying and classifying a position and an orientation of the auger of the unloading system of the cart relative to a position and an orientation of the trailer of the transport vehicle.

The autonomous agricultural system may further include instructions that, when executed by the at least one processor, cause the cart management system to determine an amount to extend or retract the auger of the unloading system of the cart based at least partially on the determined position and orientation of the auger of the unloading system of the cart relative to the position and orientation of the trailer of the transport vehicle.

One or more embodiments include a method of monitoring and controlling operation of a cart of an autonomous agricultural system, the cart being operably coupled to an agricultural vehicle of the autonomous agricultural system, the method may include: capturing, via an array of sensors mounted proximate or on an end of the agricultural vehicle facing the cart and in real-time, sensor data of the cart, an auger of an unloading system of the cart, and a commodity within a hopper of the cart; analyzing the captured sensor data utilizing one or more machine learning models to identify and classify the cart, the auger of the unloading system of the cart, and the commodity within the hopper of the cart depicted within the sensor data; and based at least partially on the analysis of the captured sensor data, automatically causing the auger of the unloading system to extend or to retract prior to or subsequent to an unloading process of unloading the commodity into a trailer of a transport vehicle.

The array of sensors may include at least one of a light detection and ranging (LIDAR) camera, an RGB camera, a stereo camera, a polarized camera, a thermal camera, an ultrasonic sensor, or a radio detection and ranging (RADAR) device.

Analyzing the captured sensor data may include utilizing a convolutional neural network (CNN) to identify and classify the cart, the auger of the unloading system of the cart, and the commodity within the hopper of the cart depicted within the sensor data.

The method may further include, based at least partially on the analysis of the captured sensor data, modifying operation of the unloading system.

Analyzing the captured sensor data further may include identifying and classifying a position and an orientation of the cart relative to a position and an orientation of the trailer of the transport vehicle.

One or more embodiments include a cart management system for monitoring and controlling operation of a cart of an autonomous agricultural system, the cart being operably coupled to an agricultural vehicle of the autonomous agricultural system. The cart management system may include: an array of sensors mounted proximate or on an end of the agricultural vehicle facing the cart; at least one processor; and at least one non-transitory computer-readable storage medium storing instructions thereon that, when executed by the at least one processor, cause the cart management system to: capture, via the array of sensors and in real-time, sensor data of the cart, an auger of an unloading system of the cart, and a commodity within a hopper of the cart; analyze the captured sensor data utilizing one or more machine learning models to identify and classify the cart, the auger of the unloading system of the cart, and the commodity within the hopper of the cart depicted within the sensor data; and based at least partially on the analysis of the captured sensor data, automatically cause the auger of the unloading system to extend or to retract prior to or subsequent to an unloading process of unloading the commodity into a trailer of a transport vehicle.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic top view of an autonomous agricultural system and a plurality of transport vehicles according to one or more embodiments of the disclosure;
FIG. 2 shows a perspective view of an autonomous agricultural system according to one or more embodiments of the disclosure;
FIG. 3 shows a top view of an autonomous agricultural system according to one or more embodiments of the disclosure;
FIG. 4 shows a top view of a transport vehicle according to one or more embodiments of the disclosure;
FIG. 5 shows a side view of a cart and an auger system of the cart according to one or more embodiments of the disclosure;
FIG. 6 shows a side view of a cart and an auger system of the cart according to one or more embodiments of the disclosure;
FIG. 7 shows a side view of a cart and an auger system of the cart according to one or more embodiments of the disclosure;
FIG. 8 shows a schematic view of a cart management system according to one or more embodiments of the present disclosure;
FIG. 9 shows a flowchart of a method of monitoring and controlling operation of a cart and/or agricultural vehicle according to one or more embodiments; and
FIG. 10 is a schematic view of a central controller according to embodiments of the disclosure.

### DETAILED DESCRIPTION

Illustrations presented herein are not meant to be actual views of any particular agricultural vehicle, grain cart, sensors, cart management system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," "front," "rear," "lateral," etc., is used for clarity and convenience in understanding the disclosure and accompanying drawings, and does not connote or depend on any specific preference or order, except where the context clearly indicates otherwise. For example, these terms may refer to an orientation of elements of an agricultural vehicle, a combine harvester, a cart, a transport vehicle, and/or an autonomous agricultural system as illustrated in the drawings. Additionally, these terms may refer to an orientation of elements of an agricultural vehicle, a combine harvester, a cart, and/or a transport vehicle when utilized in a conventional manners.

As used herein, the term "proximate," when utilized to describe positions of agricultural vehicle and/or the cart to another object (e.g., transport vehicle) means that the agricultural vehicle and/or the cart and the other object are within a given distance from each other. The distance may be at least partially dependent on a size (e.g., a lateral width in a horizontal direction orthogonal to a path of travel) of the agricultural vehicle and/or the cart. For example, the agricultural vehicle or the cart may be proximate the other object when the agricultural vehicle is within 20m, 10m, 5m, 2m, or 1m of the other object. In some embodiments, the distance may be a percentage (e.g., 25%) of the overall lateral width of the agricultural vehicle and/or cart. Additionally, in one or more embodiments, the distance may be based on an unloading system of the cart. For instance, the distance may include an appropriate distance between the cart and a transport vehicle for unloading process (e.g., unloading grain from the cart to the transport vehicle).

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

As used herein, the term "representation" may refer to a digital encoding of a physical object or phenomenon as captured by one or more sensors. The digital encoding may take various forms depending on the type of sensor data. As non-limiting examples 1) in image data, a representation may include pixels that represent visual characteristics of the object, 2) in video data, in addition to the representations of image data, a representation may include a sequence of images (frames) that capture the object's appearance and movement over time, 3) in LIDAR data, a representation may include a three-dimensional (3D) point cloud where each point represents a precise location on the object's surface, 4) in RADAR data, a representation may include a two-dimensional (2D) map or 3D map showing the object's location and movement based on radio wave reflections, 5) in thermal data, as representation may include a thermal image where different colors represent the object's temperature variations, and 6) in sound data, a representation may include a digital signal representing sound waves produced by or reflected from the object. Put another way, a representation, as used herein, includes a structured form of data that allows for the analysis, interpretation, and understanding of the physical object or phenomenon captured by the sensors.

As used herein, an "aligned position" may refer to a position and an orientation of a cart relative to a position and an orientation of a transport vehicle that aligns an auger of the cart, itself, for unloading a commodity into a trailer of the transport vehicle. Put another way, the aligned position may represent a location and orientation of the cart relative to the transport vehicle that positions and orients the cart such that an unloading system (e.g., the auger) of the cart can effectively and appropriately unload a commodity into the trailer of the transport vehicle. In some embodiments, the aligned position may represent an optimized position and orientation of the cart relative to a position and an orientation of a transport vehicle. For instance, the aligned position may represent a position and an orientation of the cart relative to the transport vehicle that positions and orients the cart and the auger of the cart such that an unloading system can correctly and precisely unload the commodity into the trailer of the transport vehicle. Furthermore, the aligned position may represent a position and an orientation of the cart relative to the transport vehicle that positions and orients a downspout of the auger at least substantially centered (e.g., horizontally, laterally centered) over the trailer of the transport vehicle. In other words, the aligned position may result in the downspout of the auger being at least substantially centered between lateral sidewalls of the trailer of the transport vehicle. This positioning ensures that the commodity is evenly distributed and minimizes the risk of spillage. Centering the downspout of the auger allows for a more controlled and efficient unloading process, ensuring that the commodity flows directly into the trailer without accumulating on one side. In some embodiments, the aligned position is further determined (e.g., calculated) based on received or determined position and orientation of the transport vehicle (e.g., a GNSS position of the transport vehicle).

As used herein, the term "real-time" may refer to immediate or near-instantaneous collection (e.g., capturing) and processing of data (e.g., sensor data) as events occur. As a result, sensor data is captured and made available for analysis or decision-making without significant delay, allowing for timely responses and actions based on most current information.

As used herein the term "position" may refer to specific location of an object in a given space, typically defined by coordinates (e.g., x, y, z) in a coordinate system. For example, a position of a cart in a field might be given by its latitude, longitude, and altitude.

As used herein the term "orientation" may refer to an object's alignment relative to a reference frame. For example, the term "orientation" refers to how an object is aligned and rotated in space. For example, the term "orientation" refers to rotational coordinates (e.g., pitch, roll, yaw).

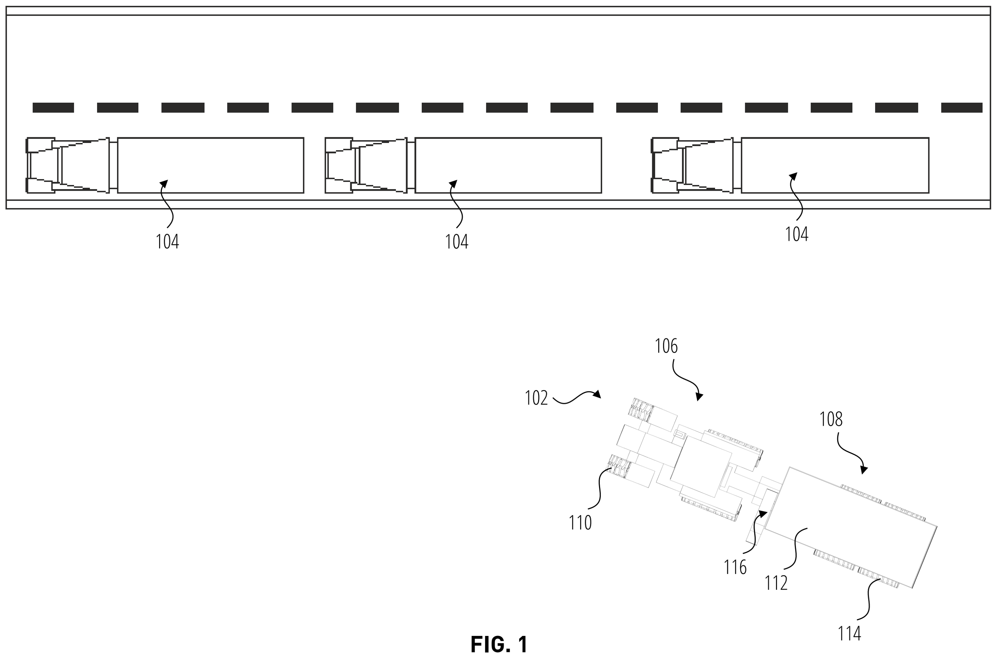

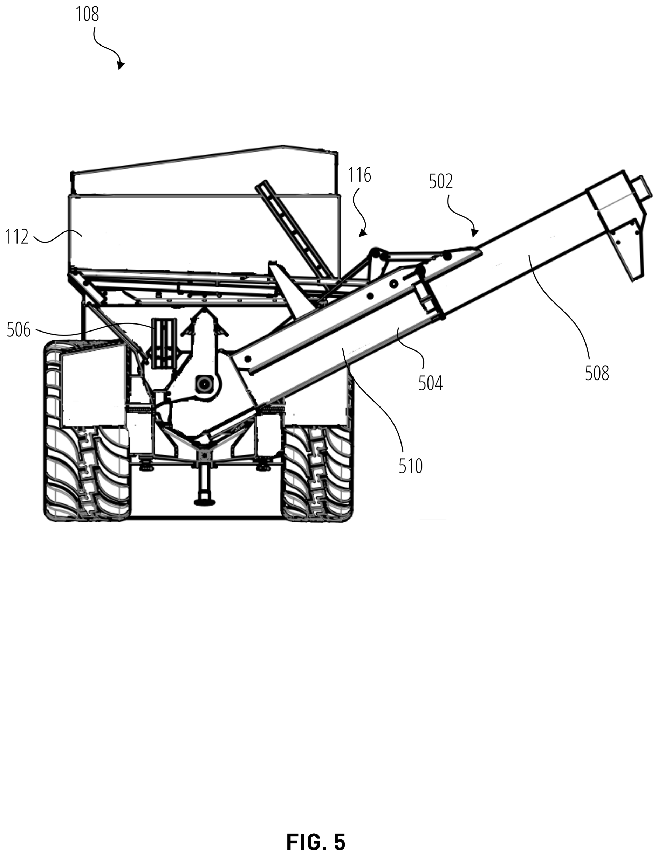

FIG. 1 is a simplified top view of an autonomous agricultural system 102 and a plurality of transport vehicles 104 according to one or more embodiments of the disclosure. The autonomous agricultural system 102 may include an agricultural vehicle 106 (e.g., a tractor) and a cart 108 (e.g., commodity trailer). The cart 108 may be coupled to a hitch of the agricultural vehicle 202 via one or more hitch attachments. The agricultural vehicle 202 may be supported by wheels 110 and/or tracks. The cart 108 may include a hopper 112 supported by wheels 114. The hopper 112 may define a container (e.g., bin) for receiving a commodity (e.g., grain) from a harvester vehicle (e.g., a combine harvester) and may include a tapered shape that facilitates a flow of the commodity towards an unloading system 116 of the cart 108. The unloading system 116 may be utilized to unload the commodity from the hopper 112 and into one or more of the plurality of transport vehicles 104. The unloading system 116 may include an auger system including an auger and a hydraulic motor. The unloading system 116 is described in greater detail below in regard to FIG. 5 through FIG. 7.

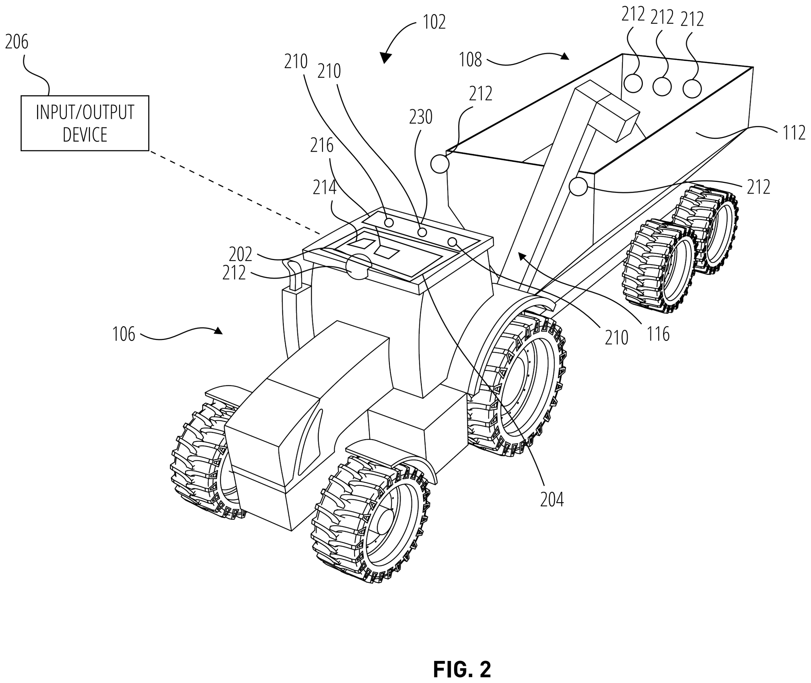

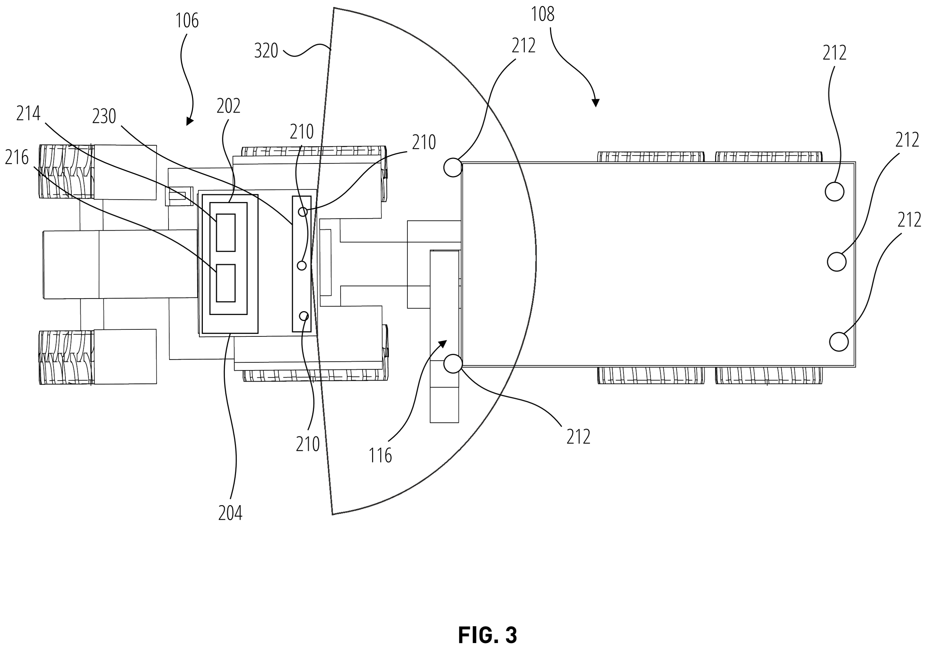

FIG. 2 is a simplified perspective view of the autonomous agricultural system 102 of FIG. 1 according to one or more embodiments of the disclosure. FIG. 3 is a simplified top view of the autonomous agricultural system 102 of FIG. 2. Referring to FIG. 2 and FIG. 3 together, as noted above, the autonomous agricultural system 102 may include the agricultural vehicle 106 and the cart 108, and the cart 108 may include the hopper 112 and the unloading system 116. In some embodiments, the agricultural vehicle 106 may include a tractor.

The agricultural vehicle 106 may further include a control system 204. The control system 204 may be configured to control one or more operations and devices of the agricultural vehicle 106 and/or the cart 108. In some embodiments, one or more parts of the control system 204 may be located in, for example, a cabin of the agricultural vehicle 106. In other embodiments, one or more parts of the control system 204 may be located on a roof of the cabin of the agricultural vehicle 106, in or proximate an engine compartment of the agricultural vehicle 106, or any other suitable portion of the agricultural vehicle 106. In one or more embodiments, one or more parts of the control system 204 may be located on or within the agricultural vehicle 106 and one or more other parts of the control system 204 may be located on or within the cart 108. In some embodiments, one or more parts of the control system 204 may be remote to the agricultural vehicle 106 and/or the cart 108.

The control system 204 may include a cart management system 202 for monitoring operations of the cart 108. The cart management system 202 may include at least one input/output device 206 (e.g., a display) and a perception system 208. The perception system 208 may be mounted on the agricultural vehicle 106 proximate a rear of the agricultural vehicle 106. Furthermore, the perception system 208 may include one or more sensors 210 (e.g., an array of sensors). The one or more sensors 210 may be at least partially operated by the cart management system 202. In some embodiments, the perception system 208 and associated one or more sensors 210 are mounted on the agricultural vehicle 106 such that fields field of view 320 of the sensors 210 encompass the cart 108 and/or equipment (e.g., unloading system 116) of the cart 108. A field of view 320 may refer to an angular extent of an observable scene that a given sensor 210 can capture. Accordingly, the one or more sensors 210 may have a viewpoint (i.e., a position from which the field of view is observed) originating from the agricultural vehicle 106.

Some of the sensors 210 may have a respective fields of view. As is described in further detail below, in some embodiments, the sensors 210 may be configured and/or controlled to capture sensor data related to the cart 108 and, in some embodiments, the agricultural vehicle 106 while the agricultural vehicle 106 and/or the cart 108 are performing an agricultural process (e.g., harvesting a commodity, unloading a commodity). Specifically, the sensors 210 may be controlled to capture sensor data such as images, videos, 3D representations, and/or other representations of the cart 108 and agricultural vehicle 106, and information (e.g., any of the foregoing data) related to the environments surrounding or around the cart 108 and the agricultural vehicle 106. In some embodiments, the sensor data may include one or more of image data, video data, thermal data, LIDAR data, RADAR data, perception data, 3D data, and/or ultrasonic data.

In some embodiments, one or more of the sensors 210 includes a field of view that faces an interior of the hopper 112 of the cart 108. In other words, one or more of the sensors 210 includes a field of view that views (e.g., encompasses) a commodity within the hopper 112 of the cart 108. In some embodiments, one or more of the sensors 210 includes a field of view that faces the unloading system 116 of the cart 108. In one or more embodiments, one or more of the sensors 210 includes a field of view that faces a lateral side of the cart 108. In one or more embodiments, one or more of the sensors 210 includes a field of view that faces hydraulic joints of the cart 108. In some embodiments, one or more of the sensors 210 includes a field of view that generally faces the cart 108 (e.g., faces rearward from the agricultural vehicle 106).

Additionally, the sensors 210 may be configured and controlled to capture various types of sensor data related to the transport vehicles 104. Specifically, the sensors 210 may be controlled to capture sensor data such as images of the transport vehicles 104, videos of the transport vehicles 104, 3D representations of the transport vehicles 104, other visual depictions of the transport vehicles 104, and information (e.g., any of the foregoing data) related to the environments surrounding or around the transport vehicles 104.

Furthermore, as is described in greater detail below, the cart management system 202 may utilize the sensor data captured by the sensors 210 of the perception system 208 to monitor and control operation of the cart 108 and/or the agricultural vehicle 106. In particular, the cart management system 202 may utilize the sensor data captured by the sensors 210 to monitor and control the unloading system 116 of the cart 108, validate orientations of an auger system of the unloading system 116, align the cart 108 relative to a combine harvester during a harvesting operation, align the cart 108 relative to a selected transport vehicle 104, orient the cart 108 relative to the agricultural vehicle 106, and/or unload a commodity from the cart 108 to a selected transport vehicle 104.

In some embodiments, the sensors 210 may include one or more of a light detection and ranging (LIDAR) camera, an RGB camera, a stereo camera, ultrasonic sensors, or a radio detection and ranging (RADAR) device. In further embodiments, one or more of the sensors 210 may include a thermal camera. For example, one or more of the sensors 210 may include a long-wave infrared (LWIR) camera. In additional embodiments, one or more of the sensors 210 may include one or more of a mid-wave infrared (MWIR) camera, a short-wave infrared (SWIR) camera, a near infrared (NIR) camera, an ultraviolet camera (UV camera), or a visible light camera with an infrared filter. I

In one or more embodiments, one or more of the sensors 210 may include a polarized camera (e.g., a polarized NIR, RGB, or SWIR camera). In particular, one or more of the sensors 210 may include one or more polarization filters that separate incoming light into polarized components. Furthermore, the polarized camera may include micro-polarizers integrated directly on the image sensor portion of the polarized camera that filter the incoming light for each detected pixel based on the pixel's polarized state (e.g., 0°, 45°, 90°, 135°). In one or more embodiments, the polarized camera may be configured to capture multiple images simultaneously with each captured image correlated to a different polarization state. Moreover, one or more algorithms may be utilized to process the images captured at different polarizations and generate relatively detailed images that can highlight features not typically visible in standard intensity-based imaging.

Furthermore, the sensors 210 may be configured to capture image data including one or more of relatively high resolution color images/video, relatively high resolution infrared images/video, or light detection and ranging data. In some embodiments, the sensors 210 may be configured to capture image data at multiple focal lengths. In some embodiments, the sensors 210 may be configured to combine multiple exposures into a single high-resolution image/video. In some embodiments, each of the sensors 210 may include multiple image sensors (e.g., cameras) with fields of view facing different directions.

As noted above, in some embodiments, the sensors 210 may include a radio detection and ranging (RADAR) device. Furthermore, the RADAR device may include a synthetic aperture radar (SAR), or an inverse synthetic aperture radar (ISAR) configured to facilitate receiving relatively higher resolution data compared to conventional radars. The RADAR device may be configured to scan the radar signal across a range of angles to capture a 2D representation of the environment, each pixel representing the radar reflectivity at a specific distance and angle. In other embodiments, the RADAR device includes a 3D radar configured to provide range (e.g., distance, depth), velocity (also referred to as "Doppler velocity"), azimuth angle, and elevational angle. The RADAR device may be configured to provide a 3D radar point cloud to the cart management system 202.

The radar data may include one or more of analog-to-digital (ADC) signals, a radar tensor (e.g., a range-azimuth-doppler tensor), and a radar point cloud. In some embodiments, the output radar data includes a point cloud, such as a 2D radar point cloud or a 3D radar point cloud (also, simply referred to herein as a "3D point cloud"). In some embodiments, the output radar data includes a 3D radar point cloud.

In some embodiments, the cart management system 202 may include or be operably coupled to one or more additional sensors 212. The additional sensors 212 may include any of the sensors described in regard to the one or more sensor 210. Furthermore, the additional sensors 212 may be mounted on one or more of the agricultural vehicle 106 or the cart 108. In some embodiments, one or more of the additional sensors 212 includes a field of view that faces forward on the agricultural vehicle 106 (e.g., in a direction of travel of the agricultural vehicle). In some embodiments, one or more of the additional sensors 212 includes a field of view that faces an interior of the hopper 112 of the cart 108. In other words, one or more of the additional sensors 212 includes a field of view that views (e.g., encompasses) a commodity within the hopper 112 of the cart 108.

Referring still to FIG. 1 through FIG. 3 together, in some embodiments, the cart management system 202 may optionally include a Global Navigation Satellite System (GNSS) receiver 214 ("GNSS receiver 214") configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202. In some embodiments, the cart management system 202 may utilize sensor data acquired via the perception system 208 combined with GNSS data (e.g., position data) and/or IMU data to monitor and control the unloading system 116 of the cart 108, validate orientations of an auger system of the unloading system 116, align the cart 108 relative to a combine harvester during a harvesting operation, align the cart 108 relative to a selected transport vehicle 104, orient the cart 108 relative to the agricultural vehicle 106, and/or unload a commodity from the cart 108 to a selected transport vehicle 104. For example, as is described in greater detail below, in some embodiments, sensor data and GNSS data may be fused and, and the fused data may be utilized to perform any of the foregoing acts. In some embodiments, one or more sensor fusion algorithms may be utilized to combine the sensor data with GNSS data and/or IMU data.

The control system 204 and/or the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 206 via the wireless transceiver 216.

In some embodiments, as noted above, the input/output device 206 may be remote from the cart management system 202 and may allow an operator of the agricultural vehicle 106 to provide input to, receive output from, and otherwise transfer data to and receive data from cart management system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more cart management systems 202 and provide one or more recommendations of adjusting operation of the agricultural vehicle 106 and/or the cart 108 and/or video data to assist an operator in navigating the agricultural vehicle 106 and/or the cart 108.

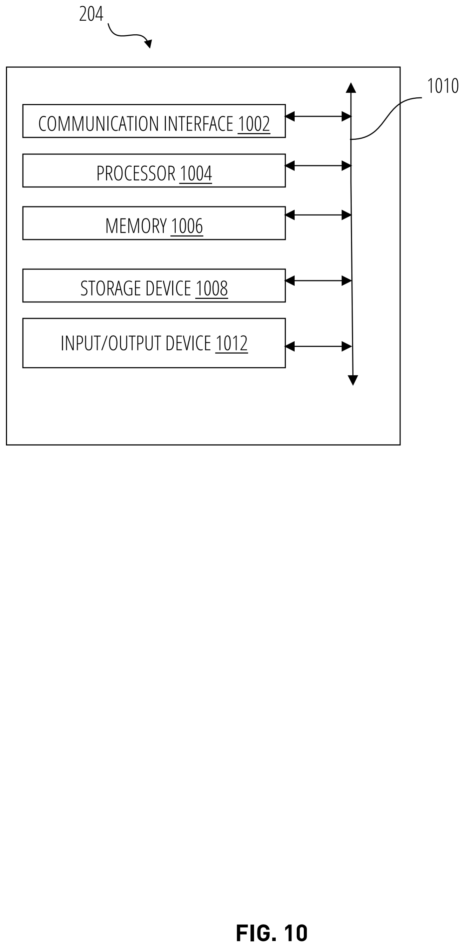

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 10. Likewise, the control system 204 may include various types of computing devices. The control system 204 is described in greater detail below in regard to FIG. 10.

Referring still to FIG. 1 through FIG. 3, while the cart management system 202 is described as being part of the control system 204 of the agricultural vehicle 106, the disclosure is not so limited. Rather, the cart management system 202 may be part of (e.g., operated on) another device in communication with the control system 204 of the agricultural vehicle 106. In further embodiments, the cart management system 202 may be part of or operated on one or more servers or remote devices in communication with the control system 204. Additionally, while FIG. 2 through FIG. 3 show the cart management system 202 as being part of and/or utilized in relation to operation of an agricultural vehicle 106 and a cart 108, the disclosure is not so limited. Rather, the cart management system 202 may be part of and/or utilized in relation to operation of any agriculture vehicle (e.g., a combine) and/or implement.

As is described in greater detail below, the cart management system 202 may enable the autonomous agricultural system 102 to detect and select an appropriate transport vehicle 104 into which the autonomous agricultural system 102 may unload a commodity (e.g., grain) subsequent to receiving the commodity from a harvester (e.g., combine harvester). For example, responsive to approaching an unloading gate and/or unloading area of an agricultural field (e.g., a designated area or structure where harvested crops are intended to be transferred from field equipment, like combines or grain carts, to transport vehicles or storage facilities), the control system 204 of the agricultural vehicle 106 may cause the sensors 210 of the control system 204 to detect vehicles (e.g., transport vehicles 104) within a given vicinity, select a transport vehicle 104, guide the agricultural vehicle 106 and cart 108 to the selected transport vehicle 104, and align the agricultural vehicle 106 and cart 108 with the transport vehicle 104.

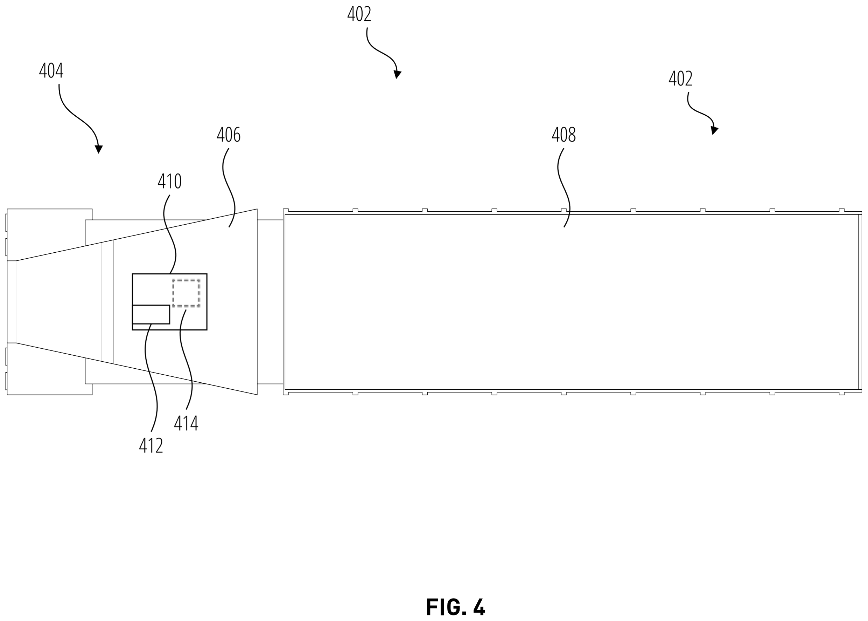

FIG. 4 is a simplified top view of a transport vehicle 402 (e.g., transport vehicle 104) according to one or more embodiments of the disclosure. The transport vehicle 402 may include a truck portion 404 having a cabin 406 and a trailer 408 coupled to the truck portion 404. Furthermore, the transport vehicle 402 may include a computing device 410 associated with (e.g., configured to communicate with) the cart management system 202 (FIG. 2) of the autonomous agricultural system 102 (FIG. 2).

The computing device 410 may include any suitable computing device with which operators can interact. For example, the computing device 410 may be a mobile device (e.g., a cell phone, a smartphone, a PDA, a tablet, a laptop, a watch, a wearable device, a smart speaker, etc.). In some embodiments, however, the computing device 410 may be a non-mobile device (e.g., a desktop or server). Additional details with respect to the computing device 410 are discussed below with respect to FIG. 10.

Regardless, the computing device 410 may include a wireless transceiver 412 for communicating via one or more wireless networks, such as, for example, WI-FI, Bluetooth, cellular, Li-Fi, Zigbee, Z-wave, and radio waves. In some embodiments, the wireless transceiver 412 may include a multi-protocol wireless receiver. The computing device 410 may communicate with the cart management system 202 (FIG. 2) of the autonomous agricultural system 102 via the wireless transceiver 412.

As is discussed in greater detail below, in some embodiments, the computing device 410 may be configured to communicate a GNSS location of the transport vehicle 402 (e.g., a respective transport vehicle) via the wireless transceiver 412. In particular, the computing device 410 may be configured to communicate a GNSS location of the transport vehicle 402 to the cart management system 202 of the autonomous agricultural system 102. The GNSS location of the transport vehicle 402 can then be utilized by the autonomous agricultural system 102 to select an appropriate transport vehicle 402, and ultimately, guide the autonomous agricultural system 102 to the appropriate transport vehicle 402. In some embodiments, the computing device 410 may include or be operably coupled to a respective GNSS receiver 414. The GNSS receiver 414 may include any of the GNSS receivers described herein.

In additional embodiments, the computing device 410 may be configured to communicate (e.g., output) directional radio signals (e.g., ultra-high frequency radio signals) via the wireless transceiver 412. The cart management system 202 can receive the directional radio signals and can then use the received directional radio signals to select an appropriate transport vehicle 402, and ultimately, guide the autonomous agricultural system 102 to the appropriate transport vehicle 402.

In one or more embodiments, the computing device 410 may initiate communication (e.g., outputs and/or inputs) via the wireless transceiver 412 responsive to the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the computing device 410 may initiate communication (e.g., transmission and/or reception of communication) via the wireless transceiver 412. In particular, the computing device 410 may monitor or be in communication with a device that monitors a geofence and/or virtual boundary.

FIG. 5 shows a front side view of the cart 108 according to one or more embodiments of the disclosure. As noted above, the cart 108 may include an unloading system 116. The unloading system 116 may be utilized to unload the commodity from the hopper 112 and into one or more of the plurality of transport vehicles 104. As mentioned above, the unloading system 116 may include an auger system 502 including an auger 504 and a hydraulic motor 506. The auger 504 may include an upper vertical auger portion 508 and a lower vertical auger portion 510.

FIG. 5 depicts the auger 504 of the auger system 502 in an unfolded state (e.g., an extended state) for an unloading process. As shown in FIG. 5, when the auger of the auger system 502 is in a first unfolded state (e.g, extended state, unload state), the upper vertical auger portion 508 and the lower vertical auger portion 510 may be aligned relative to one another and may share a common center longitudinal axis. In other words, a center longitudinal axis of the upper vertical auger portion 508 may be collinear with a center longitudinal axis of the lower vertical auger portion 510. Moreover, the upper vertical auger portion 508 and the lower vertical auger portion 510 may defined a single, at least substantially straight, pathway (e.g., tube) for the commodity to travel through.

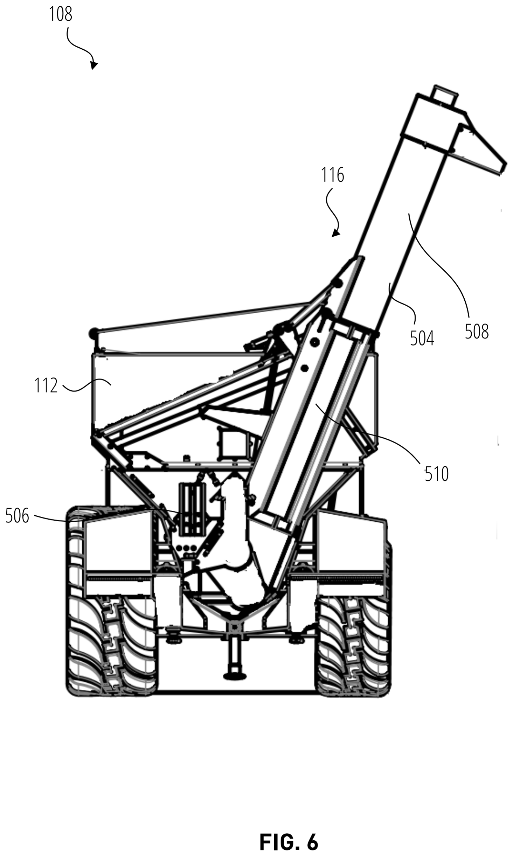

FIG. 6 shows a front side view of the cart 108 of FIG. 5 with the auger 504 of the auger system 502 in a second unfolded state (e.g., extended state). In some embodiments, the second unfolded state (e.g., extended state) may represent a state in-between an unfolded state and a folded state.

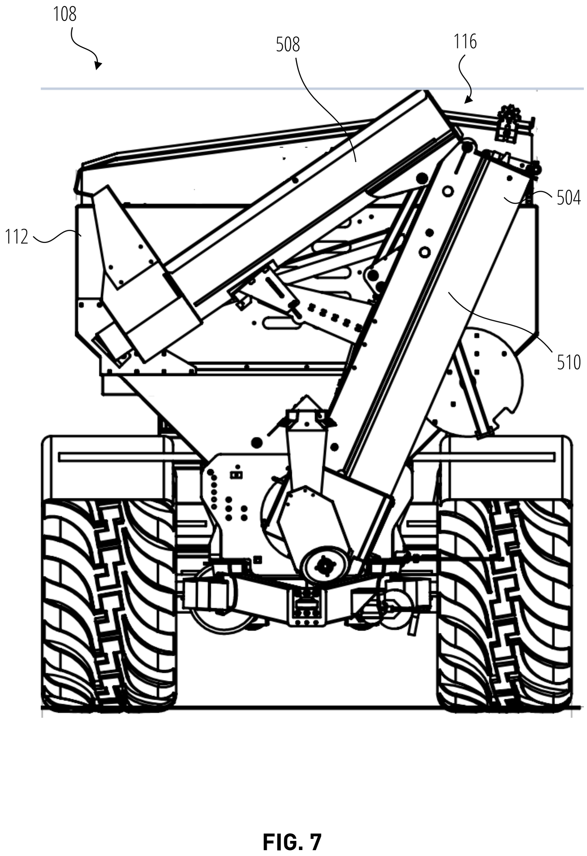

FIG. 7 shows a front side view of the cart 108 of FIG. 5 with the auger 504 of the auger system 502 in a folded state (e.g., retracted state, storage state, field state). As shown in FIG. 7, when the auger of the auger system 502 is in a folded state (e.g, retracted state), the upper vertical auger portion 508 and the lower vertical auger portion 510 may be unaligned relative to one another and may not share a common center longitudinal axis. Rather, a center longitudinal axis of the upper vertical auger portion 508 may be oriented at an acute angle relative to the lower vertical auger portion 510. Furthermore, in the folded state and retracted state, the auger 504 may be folded back on itself.

When the auger 504 of the cart 108 is in the folded state (e.g, a retracted state), the auger may be against the hopper 112 of the cart 108. The folded state (e.g., a retracted state) may be used during transport or storage to reduce the cart's 108 width and prevent damage to the auger 504.

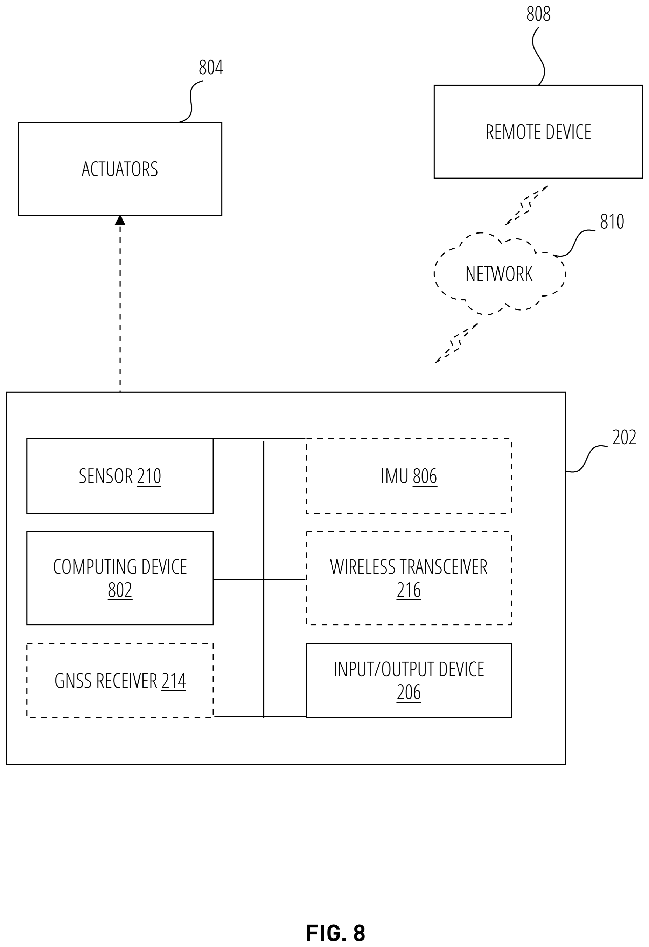

FIG. 8 is a schematic view of a cart management system 202 according to one or more embodiments of the disclosure. In one or more embodiments, the cart management system 202 may include a computing device 802, an input/output device 206, and one or more sensors sensor 210. The one or more sensors 210 and the input/output device 206 may be in operable communication with the computing device 802 and may be configured to provide data to and/or receive data and/or signals from the computing device 802. In additional embodiments, the one or more sensors 210 and/or the input/output device 206 may be separate and distinct from the cart management system 202 (e.g., as partially depicted in FIG. 1) and may be in operable communication with the cart management system 202. The computing device 802 may optionally be further operably coupled to actuators 804 of an agricultural vehicle (e.g., agricultural vehicle 106) and/or a cart (e.g., cart 108). The actuators 804 may include hydraulic valves, power switches, and/or any other known actuators for controlling operation of agricultural vehicles and carts (e.g., grain carts).

The one or more sensors 210 may include any of the sensors 210 described above in regard to FIG. 1 and FIG. 2 or any combination thereof.

As is described in greater detail below, the computing device 802 may include a communication interface, a processor, a memory, a storage device, the input/output device 206, and a bus. The computing device 802 is described in greater detail in regard to FIG. 10. In input/output device 206 may include any of the input/output devices 206 described above. In some embodiments, the cart management system 202 may not be coupled to actuators 804 of an agricultural vehicle and/or a cart.

Referring still to FIG. 8, in some embodiments, the cart management system 202 may optionally include an inertial measurement unit (IMU 806). The IMU 806 may be operably coupled to the computing device 802 and may provide measured and/or calculated data to the computing device 802. The IMU 806 may include a device that is configured to measure and output specific force, attitude, velocity, angular rate, and/or an orientation of a moving object (e.g., an agricultural vehicle) relative to a reference frame. The IMU 806 may combine accelerometers (for linear acceleration) and gyroscopes (for rotational rate) to determine the object's motion. In one or more embodiments, the IMU 806 may also include one or more magnetometers for heading reference.

Additionally, as noted above, the cart management system 202 may optionally include a GNSS receiver 214. The GNSS receiver 214 may be configured to determine precise geographical location, velocity, and time by processing signals received from multiple satellites within global constellations such as GPS, GLONASS, Galileo, and BeiDou. In particular, during operation, the GNSS receiver 214 may at least substantially continuously acquire and track satellite signals and calculate time delays between signal transmission and reception to compute pseudoranges, which are then used to determine a position of the GNSS receiver 214 through trilateration. For example, the GNSS receiver 214 may utilize various algorithms and signal processing techniques to correct for various errors and ensure a relatively high accuracy. The GNSS receiver 214 may operate in conventional manners and may provide GNSS data to the cart management system 202.

Furthermore, as noted above, the cart management system 202 may optionally include a wireless transceiver 216 for communicating via one or more wireless networks, such as, for example, WI-FI, Bluetooth, cellular, Li-Fi, Zigbee, Z-wave, and radio waves. In some embodiments, the wireless transceiver 216 may include a multi-protocol wireless receiver. The cart management system 202 may communicate with the transport vehicles, remote devices, and/or the input/output device 206 via the wireless transceiver 216.

As mentioned above, the input/output device 206 may be remote from the cart management system 202 and may allow an operator of the agricultural vehicle 106 to provide input to, receive output from, and otherwise transfer data to and receive data from cart management system 202 of the control system 204. In some embodiments, the input/output device 206 may be within the cabin of the agricultural vehicle 106. In other embodiments, the input/output device 206 may be remote from agricultural vehicle 106. The input/output device 206 may include a mouse, a keypad or a keyboard, a joystick, a touch screen, a camera, an optical scanner, network interface, modem, other known I/O devices or a combination of such I/O interfaces. The input/output device 206 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 206 is configured to provide graphical data to a display for presentation to an operator. The graphical data may be representative of one or more graphical user interfaces and/or any other graphical content as may serve a particular implementation. As is described in greater detail below, the control system 204 and the input/output device 206 may be utilized to display data (e.g., images and/or video data) received from the one or more cart management systems 202 and provide one or more recommendations of adjusting operation of the agricultural vehicle 106 and/or the cart 108 and/or video data to assist an operator in navigating the agricultural vehicle 106 and/or the cart 108.

In some embodiments, the input/output device 206 may be part of a client device. The client device may include various types of computing devices with which operators can interact. For example, the client device may be a mobile device (e.g., a cell phone, a smartphone, a PDA, a tablet, a laptop, a watch, a wearable device, a smart speaker, etc.). In some embodiments, however, the client device may be a non-mobile device (e.g., a desktop or server). Additional details with respect to the client device are discussed below with respect to FIG. 10. Likewise, the control system 204 may include various types of computing devices. The control system 204 is described in greater detail below in regard to FIG. 10.

In some embodiments, the cart management system 202 may be in communication with (e.g., be operably coupled) to one or more remote devices 808. The one or more remote devices 808 can represent various types of computing devices with which users can interact. For example, the one or more remote devices 808 can be a mobile device (e.g., a cell phone, a smartphone, a PDA, a tablet, a laptop, a watch, a wearable device, etc.). In some embodiments, however, the one or more remote devices 808 can be a non-mobile device (e.g., a desktop or server). In some embodiments, the one or more remote devices 808 include one or more servers (e.g., computer or software systems) configured to provide services, data, or resources to other computers over a network. Furthermore, in some embodiments, the one or more remote devices 808 and the input/output device 206 may be a same device. Furthermore, the one or more remote devices 808 may perform and/or assist in performing any of the actions and processes attributed to the cart management system 202.

The cart management system 202 may communicate with the one or more remote devices 808 via a network 810. The network 810 may include one or more networks, such as the Internet, and can use one or more communications platforms or technologies suitable for transmitting data and/or communication signals.

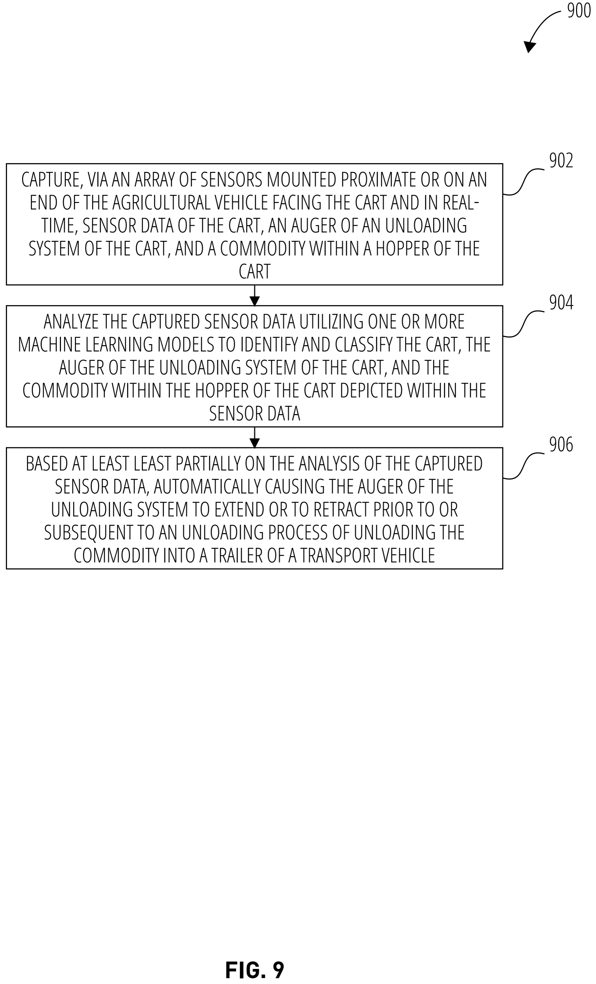

FIG. 9 shows a flowchart of a method 900 of monitoring and controlling operation of a cart (e.g., cart 108) and/or agricultural vehicle (e.g., agricultural vehicle 106) (e.g., a tractor). In one or more embodiments, a cart management system (e.g., cart management systems 202) may perform one or more acts of the method 900. For purposes of description of FIG. 9, the cart management system 202 is described as performing one or more acts of the method 900; however, it is understood that, in some embodiments, one or more acts of the method 900 may be performed by the control system 204 of the agricultural vehicle 106 and/or one or more remote devices (e.g., remote devices 808). Furthermore, although the example method 900 depicts a particular sequence of operations, the sequence may be altered without departing from the scope of the present disclosure. For example, some of the operations depicted may be performed in parallel or in a different sequence that does not materially affect the function of the method 900. In other examples, different components of an example device or system that implements the method 900 may perform functions at substantially the same time or in a specific sequence.

The method 900 may include capturing, via an array of sensors 210 mounted proximate or on an end of the agricultural vehicle 106 facing the cart 108 and in real-time, sensor data of the cart 108, the auger of the unloading system 116 of the cart 108, and a commodity within the hopper 112 of the cart 108, as show in act 902 of FIG. 9. For example, the cart management system 202 may cause the array of sensors 210 to capture sensor data of the cart 108, the auger of the unloading system 116 of the cart 108, and a commodity within the hopper 112 of the cart 108. In some embodiments, capturing sensor data of the cart 108, the auger of the unloading system 116 of the cart 108, and a commodity within the hopper 112 of the cart 108 may include capturing representations of the he cart 108, the auger of the unloading system 116 of the cart 108, and a commodity within the hopper 112 of the cart 108 within the sensor data. The one or more sensors 210 may include any of the sensors described herein, and the sensor data may include any of the sensor data described herein. Furthermore, in some embodiments, the cart management system 202 may utilize any of the of the additional sensors 212 described herein to capture one or more portions of the sensor data. In some embodiments, the sensor data may be captured in real-time and/or continuously.

In some embodiments, capturing the sensor data may be triggered by the autonomous agricultural system 102 (FIG. 2) approaching or leaving an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the cart management system 202 of the autonomous agricultural system 102 may cause the one or more sensors 210 to capture sensor data related to the cart 108, the auger system 502, and/or the transport vehicles 104. In additional embodiments, the cart management system 202 of the autonomous agricultural system 102 may monitor or be in communication with a device that monitors a geofence and/or virtual boundary and may cause the one or more sensors 210 to capture sensor data related to the cart 108, the auger system 508, and/or the transport vehicles 104 responsive to crossing the geofence and/or virtual boundary. As a result of the foregoing, capturing the sensor data may be triggered prior to or subsequent to an unloading process. In some embodiments, capturing, via the array of sensors and in real-time, sensor data of the cart 108 and the auger system 502 of the unloading system 116 of the cart 108 may be triggered by initiating or completing an unloading process. In some embodiments, capturing, via the array of sensors and in real-time, sensor data of the cart 108 and the auger system 502 of the unloading system 116 of the cart 108 may be triggered by the agricultural vehicle 106 aligning with a selected transport vehicle 104.

In one or more embodiments, capturing the sensor data may be triggered by one or more events. The events may include alignment with a transport vehicle 104, initiation of an unloading process, alignment with an agricultural harvester, or any other event. In some embodiments, capturing the sensor data may be performed at least substantially continuously throughout the agricultural process (e.g., harvesting process) or a portion of the agricultural process.

The method 900 may further include analyzing the captured sensor data utilizing one or more machine learning models to identify and classify the cart 108, the auger system 502 of the unloading system 116 of the cart 108, and the commodity within the hopper 112 of the cart 108 depicted within the sensor data, as shown in act 904 of FIG. 9. For example, the cart management system 202 may analyze the captured sensor data utilizing one or more machine learning models to identify and classify the cart 108, the auger of the unloading system 116 of the cart 108, and the commodity within the hopper 112 of the cart 108 depicted within the sensor data.

The sensor data (e.g., image data, 3D data, thermal data) captured by the one or more sensors 210 may be analyzed to identify and classify objects (e.g., the cart 108, the auger of the unloading system 116 of the cart 108, and the commodity within the hopper 112 of the cart 108, living organisms, obstacles) depicted within the sensor data. For example, the cart management system 202 may analyze the sensor data to identify and classify objects depicted in the sensor data. In some embodiments, the cart management system 202 may determine bounding boxes (e.g., a point, width, and height) of the detected objects. In additional embodiments, the cart management system 202 may perform object segmentation (e.g., object instance segmentation or sematic segmentation) to associate specific pixels of the sensor data with the detected one or more objects. In further embodiments, the cart management system 202 may classify (e.g., label) the detected objects according to determined object types.

In some embodiments, the sensor data may be analyzed via deep learning techniques (e.g., deep neural networks) to detect and classify the objects within the sensor data. For example, the cart management system 202 may utilize one or more of DNN instance models, convolutional neural networks (CNNs), single shot detectors (SSDs), region-convolutional neural networks (R-CNNs), Faster R-CNN, Region-based Fully Convolutional Networks (R-FCNs) and other machine learning models to perform the object detection and classification. In some embodiments, analyzing the sensor data may be performed utilizing one or more other or additional algorithms or models, such as, a YOLO (You Only Look Once) algorithm, Single Shot MultiBox Detector, EfficientDet, RetinaNet, DeepLab, U-Net, or MobileNet.

Any of the foregoing models may be trained to perform object detection and classification. For example, in some embodiments, the models may be trained using a combination of real sensor data (e.g., sensor data captured via one or more sensor (e.g., image) systems) and synthetic data (e.g., data that is artificial generated using algorithms and/or computer simulations). In some embodiments, the synthetic data may include sensor data depicting objects of interest (e.g., transport vehicles, agricultural vehicles, carts, living organisms, telecommunication boxes, safety poles, power boxes, road markers, road signs, etc.) with differing environments (e.g., types, amounts, and heights of vegetation, occlusion levels, light configurations, viewing angles and types (e.g., fish eye and perspective)).

Additionally, in some embodiments, analyzing the sensor data may include fusing different types of sensor data together to form fused sensor data and identifying and classifying objects using the fused sensor data. For instance, sensor data including image data may be fused with sensor data including depth data (e.g., LIDAR data and/or RADAR data) to generate fused sensor data. The different types of sensor data may be fused to form fused data via any of the manners described in U.S. Patent Applications No. 18/922,227, No. 18/922,252, No. 18/956,548, and No. 18/9222,267, to Christiansen et. al., filed on October 21, 2024. For example, the cart management system 202 may be configured to perform one or more object detection operations on the image data of the sensor data to identify and label (e.g., classify) objects in the image data of the sensor data to generate labeled image data of the sensor data. In some embodiments, the image data of the sensor data from multiple sensors 210 may be combined to generate combined image data, and the cart management system 202 may perform the one or more object detection operations on the combined image data. In other embodiments, the cart management system 202 performs the one or more object detection operations on the image data of the sensor data from each sensor 210 individually and generates labeled image data based on the image data from each sensor 210. In some embodiments, the cart management system 202 is configured to perform object tracking operation on the detected objects in the labeled image data, each tracked object defined by pixels having image data (e.g., color data, SWIR data, NIR data). In some embodiments, the sensors 210 (e.g., cameras) include an overlapping (e.g., the same) field of view (FOV). In other embodiments, the sensors 210 (e.g., cameras) include non-overlapping FOVs or have at least partially overlapping, but different FOVs.

Performing the object detection operation may include performing one or more object segmentation operations on the image data of the sensor data. The object segmentation operation may be performed on the image data of the sensor data from each individual sensor 210 separately or may be performed on the combined image data. In some embodiments, the object segmentation operation includes an instance segmentation operation. The object detection, object segmentation, and/or object tracking may be performed using an object detection neural network specifically trained for identifying and labeling one or more agricultural objects to generate the labeled image data. The object detection neural network may include associations between different types of agricultural objects (e.g., the agricultural vehicle 106 (e.g., tractor), the cart 108, the unloading system 116, the transport vehicle 104, etc.), which may be provided in metadata of the labeled image data. In embodiments where the labeled image data has been segmented, the image data may not include pixels that have not been labeled as an object and/or have been labeled as an object of interest (e.g., an agricultural object) (background pixels).

The labeled image data may be fused with depth data (e.g., LIDAR data (e.g., a 3D LIDAR point cloud) and/or the RADAR data) of the sensor data using a fusion manager of the cart management system 202. In some embodiments, the depth data is analyzed with an object detection neural network trained to identify objects in the depth data and generate labeled depth data. The cart management system 202 may be configured to perform one or more or more sensor fusion operations to form fused data including the image data (e.g., the labeled image data) and the depth data (e.g., the labeled LIDAR data). For example, the fusion manager of the cart management system 202 may be configured to project the labeled depth data onto the labeled image data, such that the fused sensor data includes the labeled image data and the labeled depth data in 2D space. In other words, in some such embodiments, the fusion of the labeled depth data and the labeled image data occurs in 2D and labeled depth data is transposed into 2D space with the labeled image data and points in the labeled depth data are matched to bounding boxes of objects (e.g., instances of objects labeled with via the manners described herein) in the labeled image data. In some embodiments, the labeled depth data includes more sparse data compared to the labeled image data. In some such embodiments, since the data fusion occurs in 2D, the data fusion may use less processing power and may process the data faster compared to data fusion in 3D.

Projecting the labeled depth data onto the labeled image data may include formatting and aligning the labeled depth data with the labeled image data, such as by aligning the timestamps of the labeled depth data and labeled image data; transforming the 3D coordinates of the labeled depth data to 2D using, for example, a projection matrix to map the 3D points onto a 2D plane (e.g., such as perspective projection or orthographic projection); and applying the projection matrix to each point in the 3D labeled depth data.

The labeled depth data may be projected onto the labeled image data with one or more fusion operations (e.g., fusion algorithms), such as MV3D, AVOD, voxels such as VoxelNet, F-PointNet, MVFP, and raw point clouds such as PointNet, PointNet++, and PointRCNN to convert the 3D data of the labeled depth data to a 2D plane representation, such as a range view, spherical view, cylindrical view, or a bird's-eye view (BEV) projection techniques.

In some embodiments, the fused sensor data includes the metadata of the labeled image data and the metadata of the labeled depth data. By way of non-limiting example, each pixel of the fused sensor data may include one or more of (e.g., each of) RGB image data, SWIR image data, LWIR image data, a flag if pixels data from different sensors do not agree, priority data for pixels within overlapping fields of view of the image data, velocity, depth (e.g., distance) data, elevational data (e.g., elevational angle), azimuth data (e.g., azimuth angle), an object label (e.g., an instance label), association data, a timestamp, and metadata (e.g., object classification data, object association data, data with respect to which of multiple cameras the image data for each pixel is based, flags for image data that does not match image data of another camera). In some embodiments, the cart management system 202 may be configured to perform an object segmentation operation on the fused data using an object segmentation neural network trained with agricultural data including image data and LIDAR data.

In some embodiments, the fused sensor data includes and corresponds to pixels of objects in the labeled image data and the labeled depth data. In other words, pixels that do not include an object classification (e.g., an instance) are not included in the fused sensor data. Stated another way, pixels of the background (not including objects) may be disregarded and may not be included in the fused sensor data. By way of non-limiting example, depth data from the labeled depth data may be projected to the labeled image data and only pixels of the fused sensor data corresponding to the objects identified and classified in the labeled image data may be included in the fused sensor data. In other words, in some such embodiments, the fused sensor data may include only pixels corresponding to bounding boxes of identified objects in the labeled image data and the corresponding data from the labeled depth data.

In one or more embodiments, since the image data fused with the 3D depth point cloud has been segmented, the fusion operation may be performed relatively faster and using less processing power compared to embodiments where the image data has not been segmented. In other words, since the labeled image data fused with the depth data does not include the background pixels, the fusion operation may be performed significantly faster than conventional fusion operations. The faster fusion of the labeled image data and the depth data facilitates real-time object detection and avoidance during performance of one or more agricultural operations using the imaging controller.

Referring still to FIG. 9, in some embodiments, analyzing the sensor data may include using the sensor data in combination with GNSS data (e.g., position data) received from via the GNSS receiver 214. For instance, analyzing the sensor data may include acquiring position data via the GNSS receiver 214, and utilizing the position data in combination with the sensor data to identify and classify objects depicted in the sensor data. For example, in some embodiments, one or more sensor fusion algorithms and/or data fusion techniques (e.g., Kalman Filters, Extended Kalman Filters, Unscented Kalman Filters, Complementary Filters, Particle Filters, Asynchronous Multi-Sensor Fusion, Event-Based Fusion, Time-Delayed Integration) may be utilized to combine the position data with the sensor data to form additional fused data. The data fusion techniques may include one or more of synchronous data fusion techniques or asynchronous data fusion techniques. Furthermore, in some embodiments, analyzing the sensor data may include using the sensor data in combination with IMU data received from the IMU 806.

The additional fused data may provide a relatively comprehensive map of the autonomous agricultural system's 102 (e.g., cart 108 and agricultural vehicle 106 combination's) surroundings, enabling precise navigation and path planning during agricultural processes. The additional fused data may enable the improved obstacle detection and avoidance. By fusing sensor data (e.g., perception data) with GNSS data to form the additional fused data, the cart management system 202 may achieve higher levels of autonomy, efficiency, and safety relative to conventional systems.

Furthermore, analyzing the sensor data may include determining positions and orientations of the cart 108, the auger of the unloading system 116 of the cart 108, the commodity within the hopper 112 of the cart 108, and/or transport vehicles 104 from the captured sensor data (e.g., image data, video data, LIDAR data, RADAR data, thermal data, 3D data, and/or sound data) and/or fused sensor data. For example, using the one or more sensors 210 to capture sensor data and analyzing the captured sensor data via any of the manners described herein to identify and classify the detected the cart 108, the auger of the unloading system 116 of the cart 108, the commodity within the hopper 112 of the cart 108, and/or transport vehicles 104 within the sensor data, the cart management system 202 may determine positions and orientations of the cart 108, the auger of the unloading system 116 of the cart 108, the commodity within the hopper 112 of the cart 108, and/or transport vehicles 104 relative to the agricultural vehicle 106 and/or the cart 108. Furthermore, when using two-dimensional sensor data, the cart management system 202 may extract the positions and orientations of the cart 108, the auger of the unloading system 116 of the cart 108, the commodity within the hopper 112 of the cart 108, and/or transport vehicles 104 within the image plane (e.g., x, y coordinates). In other words, the cart management system 202 extracts the positions and orientations of the cart 108, the auger of the unloading system 116 of the cart 108, the commodity within the hopper 112 of the cart 108, and/or transport vehicles 104 in the captured images. Additionally, when using 3D sensor data, depth information is also captured, and positions and orientations of the cart 108, the auger of the unloading system 116 of the cart 108, the commodity within the hopper 112 of the cart 108, and/or transport vehicles 104 may be extracted in a x, y, and z coordinates (e.g, a 3D space). Subsequently, the cart management system 202 may apply one or more geometric transformations (e.g., triangulation, depth estimation) to convert the positions and orientations of the cart 108, the auger of the unloading system 116 of the cart 108, the commodity within the hopper 112 of the cart 108, and/or transport vehicles 104 within the sensor data from the sensor's coordinate system (e.g., the sensor's point of view) to a real-world coordinate system (e.g., GNSS position). In particular, a known GNSS position of the agricultural vehicle 106 (i.e., a known position of the cart management system 202) and the determined positions of the detected transport vehicles 104 relative to the agricultural vehicle 106 (e.g., sensor 210) may be used to estimate GNSS positions of the detected transport vehicles 104.

In some embodiments, analyzing the sensor data may include determining an orientation and/or position of any of the cart 108, the auger of the unloading system 116 of the cart 108, the commodity within the hopper 112 of the cart 108 relative to a transport vehicle 104. For example, the orientations and/or positions of any of the cart 108, the auger of the unloading system 116 of the cart 108, the commodity within the hopper 112 of the cart 108 relative to a transport vehicle 104 may be determined via any of the manners described herein.

In some embodiments, analyzing the captured sensor data may include identifying and classifying a current state of the auger 504 of the auger system 502 of the unloading system 116. For example, via any of the analyses described herein, the cart management system 202 may determine whether the auger 504 is in an extended state, a retracted position (e.g., folded state), or some state in-between an extended state or a retracted state. In one or more embodiments, the cart management system 202 may determine a state of the auger 504 by determining a position and orientation of the upper vertical auger portion 508 relative to the lower vertical auger portion 510. Furthermore, the cart management system 202 may determine a state of the auger 504 by determining a position and orientation of the lower vertical auger portion 510 relative to the hopper 112 of the cart 108.

In one or more embodiments, analyzing the captured sensor data may include identifying and classifying a position and an orientation of the cart 108 relative to a position and an orientation of a trailer 408 of a selected transport vehicle 104. For example, via any of the analyses described herein, the cart management system 202 may identify and classify a position and an orientation of the cart 108 relative to a position and an orientation of a trailer 408 of a selected transport vehicle 104. Furthermore, in some embodiments, analyzing the captured sensor data may include identifying and classifying a position and an orientation of the a position and an orientation of the auger 504 of the auger system 502 of the unloading system 116 of the cart 108 relative to a position and an orientation of the trailer 408 of the selected transport vehicle 104.

The method 900 may also include, based at least partially on the analysis of the captured sensor data, automatically causing the auger of the unloading system 116 of the cart 108 to extend or to retract prior to or subsequent to an unloading process of unloading the commodity into a trailer of a transport vehicle 104, as shown in act 906 of FIG. 9. For example, the cart management system 202 may, based at least partially on the analysis of the captured sensor data, automatically cause the auger of the unloading system 116 of the cart 108 to extend or to retract prior to or subsequent to an unloading process of unloading the commodity into a trailer 408 of a transport vehicle 104.

In some embodiments, prior to an unloading process of unloading the commodity into a trailer 408 of a transport vehicle 104, the cart management system 202 may cause the auger of the unloading system 116 to extend responsive to determining that the cart 108 is aligned (i.e., in an aligned position) with a respective transport vehicle 104. In some embodiments, prior to an unloading process of unloading the commodity into a trailer 408 of a transport vehicle 104, the cart management system 202 may cause the auger of the unloading system 116 to extend responsive to determining that the cart 108 is within a given distance (e.g., 5m, 10m, 15m, 20m, 30m) of the trailer 408 of the transport vehicle 104 or the transport vehicle 104. In some embodiments, prior to an unloading process of unloading the commodity into a trailer 408 of a transport vehicle 104, the cart management system 202 may cause the auger of the unloading system 116 to extend and/or retract to position a downspout of the auger of the unloading system at an appropriate position (e.g., a centered position above the trailer 408 of the transport vehicle 104) to unload the commodity. In one or more embodiments, the cart management system 202 may cause the auger of the unloading system 116 to extend responsive to the autonomous agricultural system 102 (FIG. 2) approaching an unloading gate and/or unloading area of an agricultural field (e.g., a designated area or structure where harvested crops are intended to be transferred from field equipment, such as, combines or grain carts, to transport vehicles or storage facilities). For example, responsive to the autonomous agricultural system 102 crossing a geofence and/or virtual boundary, the cart management system 202 of the autonomous agricultural system 102 may cause the auger of the unloading system 116 to extend.

In some embodiments, extending the auger may include controlling one or more hydraulic systems to extend a telescopic auger such that a downspout of the auger is oriented to be over a trailer of a transport vehicle 104. In one or more embodiments, extending the auger includes swinging a non-extendible auger into a state such that a downspout of the auger is oriented to be over a trailer of a transport vehicle 104. In some embodiments, extending the auger includes unfolding an auger such that a downspout of the auger is oriented to be over a trailer of a transport vehicle 104.

In some embodiments, subsequent to an unloading process of unloading the commodity into a trailer 408 of a transport vehicle 104, the cart management system 202 may cause the auger of the unloading system 116 to retract responsive to a determination that a commodity amount within the hopper 112 of the cart has reached a lower threshold amount. In other words, the cart management system 202 may cause the auger of the unloading system 116 to retract responsive to a determination that the hopper 112 is empty or substantially empty. In one or more embodiments, the cart management system 202 may cause the auger of the unloading system 116 to retract responsive to a determination that a flow of commodity out of a downspout of the auger has ceased. In one or more embodiments, the cart management system 202 may cause the auger of the unloading system 116 to retract responsive to a determination that a trailer of the transport vehicle 104 is full and no additional transport vehicles are available for unloading. In one or more embodiments, the cart management system 202 may cause the auger of the unloading system 116 to retract responsive to the autonomous agricultural system 102 (FIG. 2) leaving an unloading gate and/or unloading area of an agricultural field. For example, responsive to the autonomous agricultural system 102 crossing a geofence and/or virtual boundary, the cart management system 202 of the autonomous agricultural system 102 may cause the auger of the unloading system 116 to retract.

In some embodiments, the cart management system 202 may also extend or retract the auger of the unloading system 116 to avoid obstacles. For instance, if the cart management system 202 detects an obstacle in the path of an extended auger, the cart management system 202 may automatically retract the auger to avoid collisions.

Retracting the auger may include controlling one or more hydraulic systems to retract a telescopic auger to a storage or field state. In one or more embodiments, retracting the auger includes swinging a non-extendible auger into a storage or field state. In some embodiments, extending the auger includes folding an auger into a storage or field state.

Referring still FIG. 9, in some embodiments, the method 900 and act 906 may include, based at least partially on the analysis of the captured sensor data, modifying operation of the unloading system 116 of the cart 108. For example, the cart management system 202 may, based at least partially on the analysis of the captured sensor data, cause the auger 504 to change state (e.g., move from a retracted state to an extended state and vice-versa), cause the unloading system 116 to initiate an unloading process, cause the unloading system 116 to pause the unloading process, and/or cause the unloading system 116 to termination (e.g., halt) an unloading process.

In some embodiments, causing the auger 504 to retract or extend may include, based at least partially on the determined position and orientation of the auger 504 of the auger system 502 of the unloading auger system 502 of the cart 108 determined in act 904, determining an amount the auger 504 needs to extend or retract in order to achieve an extended state or a retracted state, respectively.

Referring still to FIG. 9, in some embodiments, the method 900 may optionally include causing the agricultural vehicle 106 and the cart 108 to automatically align with a selected transport vehicle 104. Aligning the agricultural vehicle 106 and the cart 108 to automatically align with a selected transport vehicle 104 may be performed prior to, during, or subsequent to any of act 902, act 904, or act 906. As a non-limiting example, the control system 204 of the agricultural vehicle 106 may control one or more actuators and one or more operations (e.g., steering and propulsion) of the agricultural vehicle 106 and/or cart 108 to cause the agricultural vehicle 106 and/or cart 108 to align with the selected transport vehicle 104. Causing the agricultural vehicle 106 and the cart 108 to automatically align with the selected transport vehicle 104 may include utilizing position data received from the selected transport vehicle 104 (e.g., a GNSS position of the transport vehicle 104), position data determined regarding the selected transport vehicle (e.g., relative position data regarding to the selected transport vehicle 104), and/or position data related to the agricultural vehicle 106 and/or cart 108 (e.g., a GNSS position of the agricultural vehicle 106 and/or cart 108). In particular, the cart management system 202 may utilize a determined position of the selected transport vehicle 104 and position data related to the agricultural vehicle 106 and/or cart 108 to determine a starting position (e.g., present position) of the agricultural vehicle 106 and/or cart 108 relative to an aligned position of agricultural vehicle 106 and/or cart 108 (e.g., an aligned position and orientation of the agricultural vehicle 106 and/or cart 108 relative to the transport vehicle 104).

Causing the agricultural vehicle 106 and the cart 108 to automatically align with the selected transport vehicle 104 may further include determining a path to the aligned position from a current position of the agricultural vehicle 106 and/or cart 108. For example, the cart management system 202 may determine the path from the current position of the agricultural vehicle 106 and/or cart 108 to the aligned position. In some embodiments, the cart management system 202 may utilize one or more of high precision maps and real-time environment analysis to determine a path from the current position of the agricultural vehicle 106 and/or cart 108 to the aligned position. In one or more embodiments, the cart management system 202 may further utilize data captured by the one or more sensors 210 to determine the path from the position of the agricultural vehicle 106 and/or cart 108 to the aligned position and to identify obstacles in the determined path. Additionally, the cart management system 202 may perform dynamic path adjustments using the real-time data to adjust the determined path to avoid the identified obstacles. Furthermore, the cart management system 202 may utilize one more path planning algorithms and machine learning techniques to determine the path from the current position of the agricultural vehicle 106 and/or cart 108 to the aligned position. As noted above, in some embodiments, the cart management system 202 may further utilize data captured by the one or more sensors 210 to identify obstacles in the determined path.

FIG. 10 is a schematic view of the control system 204 (e.g., computing device) that may implement the cart management system 202, which may operate one or more functions of the agricultural vehicle 106 and/or the cart 108 according to some embodiments of the disclosure. Furthermore, FIG. 10 may also represent the computing devices 410, which may operate the transport vehicle 104 according to some embodiments of the disclosure. For ease of description, FIG. 10 is described herein with reference to the control system 204; however, the disclosure is not so limited, and the description of FIG. 10 is equally applicable to the cart management system 202 itself and the computing devices 410.

The control system 204 may include a communication interface 1002, a processor 1004, a memory 1006, a storage device 1008, and a bus 1010 in addition to the input/output device 1012.

In some embodiments, the processor 1004 includes hardware for executing instructions, such as those making up a computer program. As an example, and not by way of limitation, to execute instructions, the processor 1004 may retrieve (or fetch) the instructions from an internal register, an internal cache, the memory 1006, or the storage device 1008 and decode and execute them. In some embodiments, the processor 1004 may include one or more internal caches for data, instructions, or addresses. As an example, and not by way of limitation, the processor 1004 may include one or more instruction caches, one or more data caches, and one or more translation look aside buffers (TLBs). Instructions in the instruction caches may be copies of instructions in the memory 1006 or the storage device 1008.

The memory 1006 may be coupled to the processor 1004. The memory 1006 may be used for storing data, metadata, and programs for execution by the processor(s). The memory 1006 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1006 may be internal or distributed memory.

The storage device 1008 may include storage for storing data or instructions. As an example, and not by way of limitation, storage device 1008 can comprise a non-transitory storage medium described above. The storage device 1008 may include a hard disk drive (HDD), a floppy disk drive, Flash memory, an optical disc, a magneto-optical disc, magnetic tape, or a Universal Serial Bus (USB) drive or a combination of two or more of these. The storage device 1008 may include removable or non-removable (or fixed) media, where appropriate. The storage device 1008 may be internal or external to the computing storage device 1008. In one or more embodiments, the storage device 1008 is non-volatile, solid-state memory. In other embodiments, the storage device 1008 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 1002 can include hardware, software, or both. The communication interface 1002 may provide one or more interfaces for communication (such as, for example, packet-based communication) between the control system 204 and one or more other computing devices or networks (e.g., a server, etc.). As an example, and not by way of limitation, the communication interface 1002 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 1010 (e.g., a Controller Area Network (CAN) bus) may include hardware, software, or both that couples components of control system 204 to each other and to external components.

The input/output device 1012 may allow an operator of the control system 204 to provide input to, receive output from, and otherwise transfer data to and receive data from control system 204. The input/output device 1012 may include a mouse, a keypad or a keyboard, a joystick, a touch screen, a camera, an optical scanner, network interface, modem, other known I/O devices or a combination of such I/O interfaces. The input/output device 1012 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 1012 is configured to provide graphical data to a display for presentation to an operator. The graphical data may be representative of one or more graphical user interfaces and/or any other graphical content as may serve a particular implementation. The input/output device 1012 may be utilized to display data (e.g., images and/or video data) received from the one or more image sensors and provide one or more recommendations of adjusting operation of the agricultural vehicle 106 and/or the cart 108 and/or video data to assist an operator in navigating the agricultural vehicle 106 and cart 108.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. An autonomous agricultural system comprising an agricultural vehicle and a cart operably coupled to the agricultural vehicle, the agricultural vehicle comprising:
a cart management system for monitoring and controlling operation of the cart and comprising:
an array of sensors mounted proximate or on an end of the agricultural vehicle facing the cart;
at least one processor; and
at least one non-transitory computer-readable storage medium storing instructions thereon that, when executed by the at least one processor, cause the cart management system to:
capture, via the array of sensors and in real-time, sensor data of the cart, an auger of an unloading system of the cart, and a commodity within a hopper of the cart;
analyze the captured sensor data utilizing one or more machine learning models to identify and classify the cart, the auger of the unloading system of the cart, and the commodity within the hopper of the cart depicted within the sensor data; and
based at least partially on the analysis of the captured sensor data, automatically cause the auger of the unloading system to extend or to retract prior to or subsequent to an unloading process of unloading the commodity into a trailer of a transport vehicle.

2. The autonomous agricultural system of claim 1, wherein the array of sensors comprises at least one of a light detection and ranging (LIDAR) camera, an RGB camera, a stereo camera, a polarized camera, a thermal camera, an ultrasonic sensor, or a radio detection and ranging (RADAR) device.

3. The autonomous agricultural system of claims 1 or 2, wherein analyzing the captured sensor data comprises utilizing a convolutional neural network (CNN) to identify and classify the cart, the auger of the unloading system of the cart, and the commodity within the hopper of the cart depicted within the sensor data.

4. The autonomous agricultural system of any one of claims 1-3, wherein analyzing the captured sensor data further comprises identifying and classifying the transport vehicle.

5. The autonomous agricultural system of any one of claims 1-4, wherein capturing, via the array of sensors and in real-time, sensor data of the cart, the auger of the unloading system of the cart, and the commodity within a hopper of the cart is triggered by the agricultural vehicle crossing a virtual boundary.

6. The autonomous agricultural system of any one of claims 1-5, wherein capturing, via the array of sensors and in real-time, sensor data of the cart, the auger of the unloading system of the cart, and the commodity within a hopper of the cart is triggered by the agricultural vehicle aligning with the transport vehicle.

7. The autonomous agricultural system of claim 6, wherein the agricultural vehicle aligning with the transport vehicle comprises:
determining a path between a current position of the agricultural vehicle and an aligned position relative to the transport vehicle; and
causing the agricultural vehicle to travel along the determined path to the aligned position.

8. The autonomous agricultural system of claim 7, wherein the aligned position comprises a position and orientation of the agricultural vehicle relative to a determined position of the transport vehicle that aligns the agricultural vehicle for unloading the commodity into the trailer of the transport vehicle.

9. The autonomous agricultural system of any one of claims 1-8, further comprising instructions that, when executed by the at least one processor, cause the cart management system to, based at least partially on the analysis of the captured sensor data, modify operation of the unloading system.

10. The autonomous agricultural system of any one of claims 1-9, further comprising instructions that, when executed by the at least one processor, cause the cart management system to, based at least partially on the analysis of the captured sensor data, halt operation of the unloading system.

11. The autonomous agricultural system of any one of claims 1-10, wherein analyzing the captured sensor data further comprises identifying and classifying a current position of the auger of the unloading system.

12. The autonomous agricultural system of any one of claims 1-11, wherein analyzing the captured sensor data further comprises identifying and classifying a position and an orientation of the cart relative to a position and an orientation of the trailer of the transport vehicle.

13. The autonomous agricultural system of claim 12, wherein analyzing the captured sensor data further comprises identifying and classifying a position and an orientation of the auger of the unloading system of the cart relative to a position and an orientation of the trailer of the transport vehicle.

14. The autonomous agricultural system of claim 13, further comprising instructions that, when executed by the at least one processor, cause the cart management system to determine an amount to extend or retract the auger of the unloading system of the cart based at least partially on the determined position and orientation of the auger of the unloading system of the cart relative to the position and orientation of the trailer of the transport vehicle.

15. A method of monitoring and controlling operation of a cart of an autonomous agricultural system, the cart being operably coupled to an agricultural vehicle of the autonomous agricultural system, the method comprising:
capturing, via an array of sensors mounted proximate or on an end of the agricultural vehicle facing the cart and in real-time, sensor data of the cart, an auger of an unloading system of the cart, and a commodity within a hopper of the cart;
analyzing the captured sensor data utilizing one or more machine learning models to identify and classify the cart, the auger of the unloading system of the cart, and the commodity within the hopper of the cart depicted within the sensor data; and
based at least partially on the analysis of the captured sensor data, automatically causing the auger of the unloading system to extend or to retract prior to or subsequent to an unloading process of unloading the commodity into a trailer of a transport vehicle.
